# EUROPEAN PATENT SPECIFICATION

(11) **EP 1 482 615 B1**
(45) Date of publication and mention of the grant of the patent: **10.12.2008**
(21) Application number: 04380092.9
(22) Date of filing: 22.04.2004
(51) Int. Cl.: H02G 3/06

(54) **Adaptor for the curbature of cables laid in an openable raceway**
Krümmungsadapter für Kabeln in einer Öffenbaren Kabelrinne
Adaptateur de courbure pour câbles installés dans une goulotte ouvrable

(30) Priority: 06.05.2003 ES 200301088 U
(43) Date of publication of application: 01.12.2004
(73) Proprietor: Unex Aparellaje Electrico S.L., 08903 L'Hospitalet de Llobregat (Barcelona) (ES)
(72) Inventor: Benito Navazo, Juan Manuel, 08290 Sant Cugat del Valles (Barcelona) (ES)
(74) Representative: Curell Aguilà, Marcelino

(56) References cited:
- EP-A- 1 349 249
- EP-A- 1 355 397
- WO-A-00/67052
- US-A- 6 002 089

## Description

### Field of the Invention

The invention relates to an adaptor for the curvature of cables laid in an openable raceway, more precisely one having special application in the case of laying optical fibre cables in said openable raceways, without excluding thereby the application thereof to the case of electrical cables.

Openable raceways are understood to be those formed by a base section complemented by a cover section engageable with the former, both sections being structured by rectilinear portions. Where a raceway changes direction, there meet at least two of said base section portions at an angle of normally 90°, the meeting point forming internally an elbow in the form of a sharp edged convex right dihedron, both in the flat angles and in the exterior angles of the raceways, the flat angles being understood to be those formed by two meeting portions of rectilinear raceways lying on one same plane, and the external angles are understood to be those where the rectilinear portions of raceway lie on different planes of one same convex dihedron.

### State of the Art

The existence of said sharp edge at the said elbows is a risk for the integrity of the curved portions of the cables which, in their layout, are opposite said elbows and may bear against the sharp edges thereof under their own weight or as a result of the tension caused therein during their laying, causing a curve close to 90° which may give rise by bending to the breakage of the optical fibres which are of a relatively fragile vitreous nature.

It is obvious from the above that it would be desirable to suppress said convex right-angled elbows and replace them with curved connecting members for both meeting portions, whereby the presence of sharp edges would be avoided and the curve of the cables would be made gentler.

Nevertheless, the proposed solution is hard to apply in practice, since it increases the number of parts required for an installation, for the difficulty of assembling the rectilinear portions with said curved members and for the increase in material cost and installation time.

US-6002089-A (HEMINGWAY JEFFREY D et al.) discloses an arcuate insert to be disposed between two intersecting raceway sections in order to form an arcuate corner for controlling the bend radius of a cable contained within the raceway.

### Summary of the Invention

With a view to overcoming such drawback, without incurring the problems mentioned in the above paragraph, the solution has been adopted of rounding off said convex right dihedron with a curve appropriate for optical fibre cables, which prevents them from reaching a critical curvature close to that of breakage, and that this be realizable by means which are easily applicable to the conventional raceways.
In accordance with the foregoing solution, there has been developed an adaptor for the curvature of cables laid in an openable raceway, adapted to be applied to the elbows which, in the form of convex dihedrons, are formed in said openable raceway, said openable raceway being of the type comprising sections formed by rectilinear portions meeting at a point to form thereat, directly or indirectly, one of said elbows having a sharp edge, said elbow corresponding to a change of direction of said raceway, said adaptor being characterized in that it is formed by a channel-shaped body member having a concave surface for application to the sharp edge of said elbow and to the two surfaces of said elbow adjacent said sharp edge, and a convex bearing surface for said cables, opposite to said concave surface, which is spaced from said concave surface by a distance gradually reducing towards the longitudinal ends of said channel-shaped body member up to forming respective edge flaps for attachment to the surfaces of said elbow.

Said channel-shaped body member is formed by a sheet-like member generally rectangular in plan view and omega-shaped in cross section which, in the direction of one of the main dimensions thereof, has a hump-shaped configuration extending lengthwise to said main dimension in respective edge flaps, said edge flaps having means for attachment to the walls of said sections forming the elbow.

Said sheet-like member is transversely provided with spaced apart weakening lines allowing said sheet-like member to be split into segregated portions appropriate for the height of said raceway.

In one advantageous solution, said weakening lines of the sheet-like member consist of lines of perforations.

Preferably, said weakening lines are formed in staggered form, defining in said segregated portions fitting notches for assembly ribs disposed on intermediate partition walls of the raceway.

Preferably, said sheet-like member is fixedly provided at at least one end of said hump-shaped configuration and of said edge flaps with a flat visor-like sheet-like extension which is perpendicular to said sheet-like member and has a concave internal edge, coinciding with the edge of said sheet-like member, and a convex external edge formed by two rectilinear portions connected by a curved portion.

In a preferred solution, said attachment means for the edge flaps consists of adherent means, which may be physical adherent means, such as for example adhesives, or mechanical adherent means, such as, for example, hook and loop surface fasteners like "Velcro"®.

In another advantageous alternative solution, said attachment means for the edge flaps is formed by mechanical means, such as for example, insertion, plugging or press-fit.

Preferably, in the case of externally angled raceways having internal partition walls, said sheet-like member is complemented by a angular flat member having a concave edge with which it engages in said hump-shaped configuration of the sheet-like member, while, at the ends thereof, said angular flat member engages in said intermediate partition walls.

More preferably, said angular flat member is provided, along both sides thereof, with weakening lines which cross each other and are spaced apart depending on the height dimension of the intermediate partition walls.
In an advantageous solution, said weakening lines of the angular flat member consist of lines of perforations.

Advantageously, said sheet-like member is provided, on the concave surface thereof, with a partition wall extending perpendicularly to said sheet-like member from one said edge flap to the other, said partition wall having a right-angled notch for reliably centrally locating said sheet-like member in the convex right angle formed by the elbow.

### Brief Description of the Drawings

To facilitate the understanding of the foregoing ideas, there is described hereinbelow a preferred embodiment of the invention, with reference to the accompanying illustrative drawings, in which:
Figure 1 is an elevation view of an uncovered elbow of a raceway for laying cables formed as a flat angle, wherein it is to be seen that the cable laid therein is applied against the sharp edge of the convex dihedron formed by the elbow, with the risk that, on being subject to tension, the angle of bend thereof may create a very tight bend which may cause tensile breakage of one or more components of the cable, particularly in the case of optical fibre cables.
Figure 2, in a similar fashion to the previous Figure, is a view of an elbow in which there has been installed an adaptor for the curvature of a cable, on the passage thereof through an elbow of a raceway, according to the invention.
Figure 3 is a front perspective view of a preferred embodiment of the adaptor for the curvature of cables according to the invention.
Figure 4 is a rear perspective view of the adaptor of the previous Figure.
Figure 5 is deleted.
Figure 6 is an upper front perspective view of an elbow of a raceway, forming an exterior angle, the raceway having an internal partition wall and two adaptors, such as that of Figures 3 and 4.
Figure 7 is a front perspective view of an adaptor for the curvature of cables of the type shown in Figures 3 and 4, having a connecting supplement between internal partition walls formed by an angular flat member.
Figure 8 is a top plan view of the adaptor of the previous Figure positioned in an elbow shown in phantom line.
Figure 9 is an upper front perspective view of an elbow of a raceway, forming an exterior angle, with internal partition walls in which there is installed the adaptor and the angular flat member of Figure 7.

### Detailed Description of Embodiments of the Invention

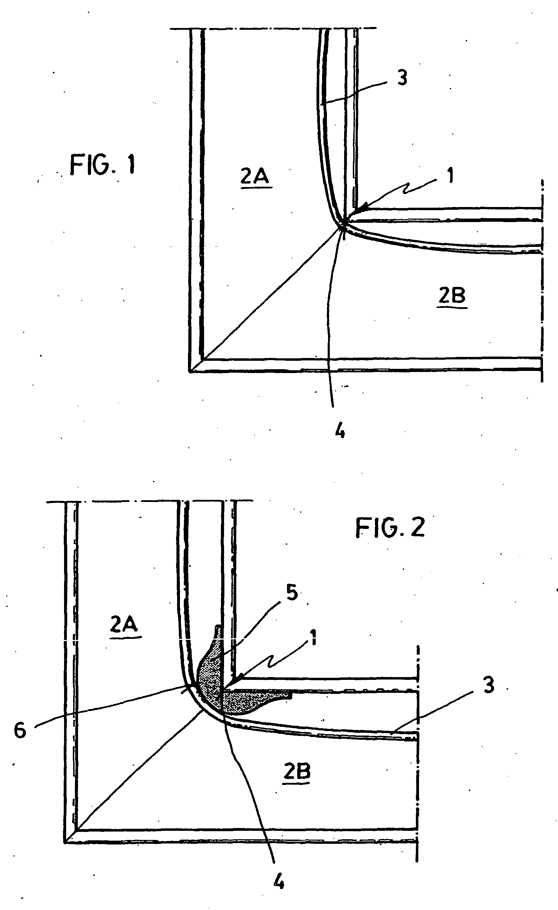

Figure 1 shows the conventional case of a cable run passing by a convex right-angled elbow of a cable raceway, formed by rectilinear portions of channel-like base sections and cover sections therefor.

As may be seen in said Figure, the elbow 1, configured as a convex right dihedron, is formed by the mitered intersection at 45° of two portions 2A and 2B of a channel-like base section and over which there is laid a cable 3 which arcuately bends while bearing against the sharp edge 4 of the elbow 1 and forcing the curvature, whereby there is the possibility that with the cable 3 being under tension, due either to its own weight or to laying operations thereof, a flexion may occur in the bend with an extremely tight angle causing tensile breakage of part of the components of the cable 3.

In order to avoid or reduce as far as possible this risk of breakage, the solution has been adopted of suppressing the sharp edge 4, as may be seen in Figure 2, by the superpositioning of a channel-shaped body member insert 5 which, on the one hand, widens the said sharp edge 4, conferring thereon a rounded surface forming a bed 6 for the cable 3 preventing the undesired flexion thereof, and, on the other hand, forms over the sharp edge 4 a channel for seating the cable.

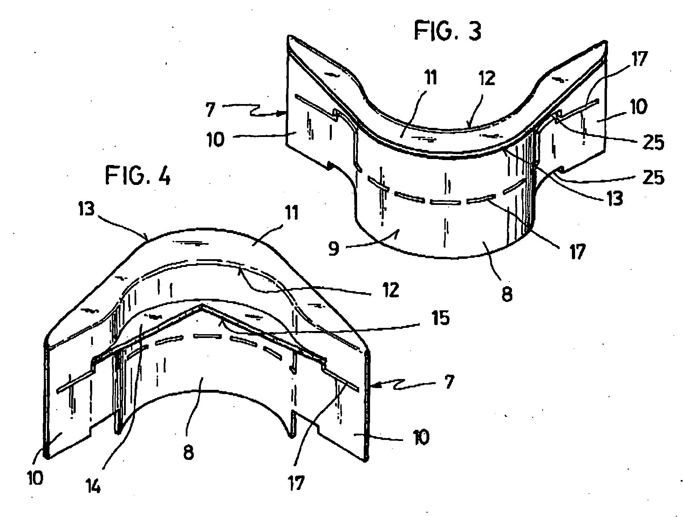

Figures 3 and 4 show a preferred embodiment of the object of the invention, wherewith there is achieved the desired purpose for the said channel-shaped body member insert 5, which has been called adaptor 7 for the curvature of the cables 3 laid in an openable raceway.

Said adaptor 7 is formed, according to said preferred embodiment, by a sheet-like member 8 generally rectangular in plan view which, in the direction of one of the two main dimensions thereof, has a hump-shaped configuration 9 which extends longitudinally to said main dimension and uninterruptedly into respective edge flaps 10, all according to a cross section similar to that of the letter omega, such edge flaps 10 being provided with means for attachment to the walls of the channel-like base sections 2A and 2B forming the elbow 1.

Said adaptor 7 of Figures 3 and 4 is provided at at least one end of the hump-shaped configuration 9 and of the edge flaps 10 thereof with a flat sheet-like visor-like extension 11, which is perpendicular to said sheet-like member 8 and has a concave inner edge 12, coinciding with the edge of said sheet-like member 8 and a convex outer edge 13, which is mixed and is formed by two rectilinear end portions and a curved center portion.

Furthermore, the sheet-like member 8, on the concave surface thereof, may have a wall 14, which extends perpendicularly from one edge flap 10 to the other and which has a broad right angled notch 15 for centering the said sheet-like member 8 securely on the convex right dihedron of the elbow 1.

The adaptors 7, formed by shaping of the sheet-like member 8, are adjusted to the height dimensions of the walls of the channel-like base sections 2A and 2B by weakening or perforation lines 17 allowing said sheet-like member 8 to be divided.

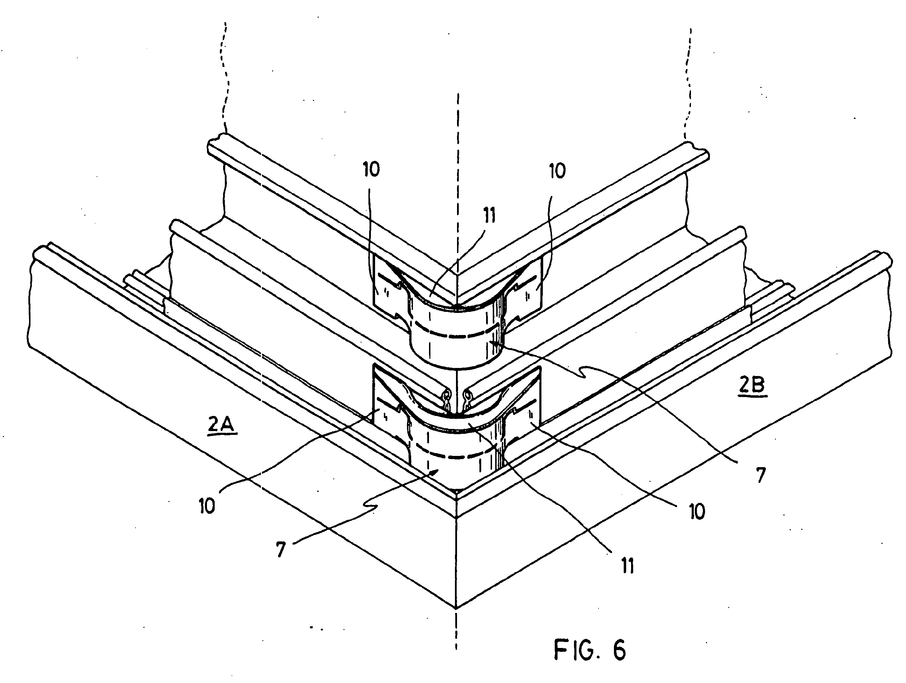

In the case of the adaptors 7, as may be seen in Figure 6, it is the edge flaps 10 themselves which have self-adhesive means for attachment to said walls forming the elbow 1 or convex right dihedron. In fact, as may be seen in Figure 3, the weakening lines 17 of the adaptors 7 have a staggered form, defining fitting notches 25 for mounting ribs (not shown) arranged on intermediate partition walls of the raceway in which said adaptors are mounted.

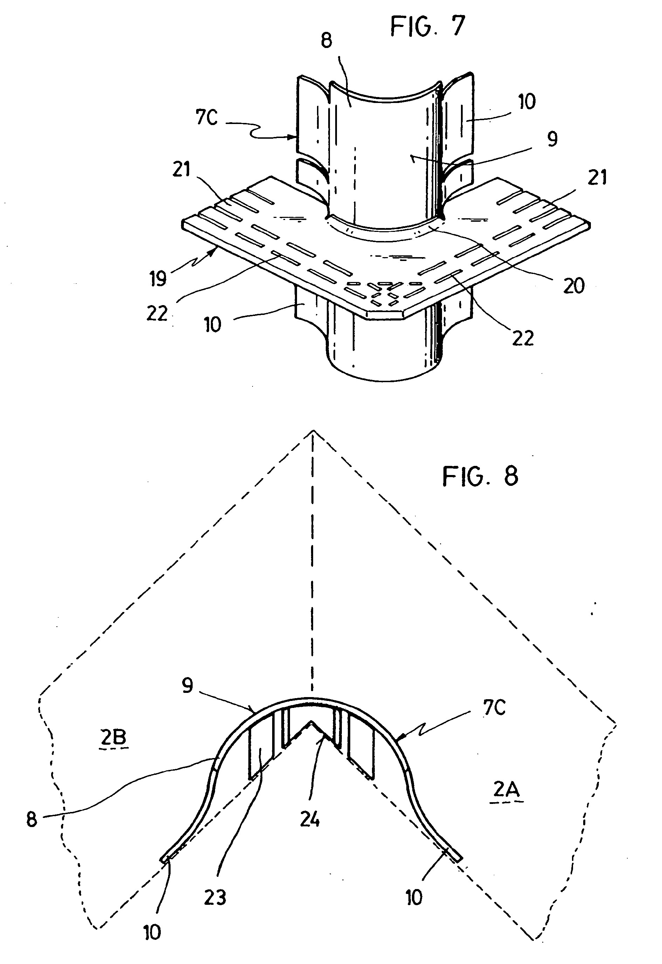

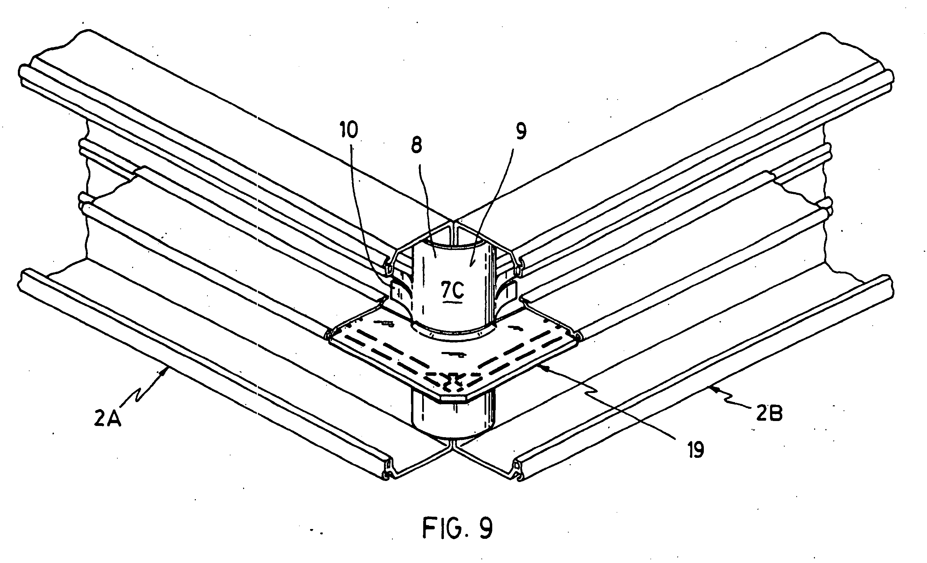

Where channelled base sections 2A and 2B having intermediate partition walls, as shown in Figure 9, are used, there are used the adaptors 7C, shown in Figures 7 and 8, in which the sheet-like member 8 having the omega-shaped cross section with the hump-shaped configuration 9 and its edge flaps 10 is complemented by a angular flat member 19 which engages with its concave portion 20 in the said hump-shaped configuration 9 of the sheet-like member 8, while it engages with its ends 21 in the hollow intermediate partition walls.

This angular flat member 19 is provided with weakening lines 22 along both sides thereof, which cross each other and may be lines of perforation.

Also the sheet-like member 8 in the adaptors 7C is provided with a centering support ensuring coupling to the elbow 1, formed by overhanging flanges 23 forming a right-angled notch 24.

## Claims

1. An adaptor for the curvature of cables (3) laid in an openable raceway, adapted to be applied to the elbows (1) which, in the form of convex dihedrons, are formed in said openable raceway, said openable raceway being of the type comprising sections (2A, 2B) formed by rectilinear portions meeting at a point to form thereat, directly or indirectly, one of said elbows (1) having a sharp edge (4), said elbow (1) corresponding to a change of direction of said raceway, said adaptor being formed by a channel-shaped body member (5) having a concave surface of application to the sharp edge (4) of said elbow (1) and to the two surfaces of said elbow (1) adjacent said sharp edge (4), and a convex surface for supporting said cables (3), opposite to said concave surface, which is spaced from said concave surface by a distance gradually reducing towards the longitudinal ends of said channel-shaped body member (5) up to forming respective edge flaps (10) for attachment to the surfaces of said elbow (1), said channel-shaped body member (5) being formed by a sheet-like member (8) generally rectangular in plan view and omega-shaped in cross section which, in the direction of one of the main dimensions thereof, has a hump-shaped configuration extending lengthwise to said main dimension in respective edge flaps (10), said edge flaps (10) having means for attachment to the walls of said sections (2A, 2B) forming the elbow (1), **characterized in that** said sheet-like member (8) is transversely provided with weakening lines (17) separated from one another allowing said sheet-like member (8) to be split into segregated portions appropriate for the height of said raceway.

2. The adaptor of claim 1, **characterized in that** said weakening lines (17) of the sheet-like member (8) are formed by lines of perforations.

3. The adaptor of claim 1 or claim 2, **characterized in that** said weakening lines (17) are formed in staggered form, defining in said segregated portions fitting notches (25).

4. The adaptor of any one of claims 1 to 3, **characterized in that** said sheet-like member (8) is fixedly provided at at least one end of said hump-shaped configuration (9) and of said edge flaps (10) with a flat visor-like sheet-like extension (11) which is perpendicular to said sheet-like member (8) and has a concave internal edge (12), coinciding with the edge of said sheet-like member (8), and a convex external edge (13) formed by two rectilinear portions connected by a curved portion.

5. The adaptor of any one of claims 1 to 4, **characterized in that** said attachment means for the edge flaps (10) consists of adherent means.

6. The adaptor of any one of claims 1 to 4, **characterized in that** said attachment means for the edge flaps (10) is formed by mechanical means.

7. The adaptor of any one of claims 1 to 6, **characterized in that** said sheet-like member (8) is complemented by a angular flat member (19) having a concave edge with which it engages in said hump-shaped configuration (9) of the sheet-like member (8).

8. The adaptor of claim 7, **characterized in that** said angular flat member (19) is provided, along both sides thereof, with weakening lines (22) which cross each other and are spaced apart from one another.

9. The adaptor of claim 8, **characterized in that** said weakening lines (22) of the angular flat member (19) are formed by lines of perforations.

10. The adaptor of any one of claims 1 to 9, **characterized in that** said sheet-like member (8) is provided, on the concave surface thereof, with a partition wall (14) extending perpendicularly to said sheet-like member (8) from one said edge flap (10) to the other, said partition wall (14) having a right-angled notch (15).

## Patentansprüche

1. Adapter für die Krümmung von in einem zu öffnenden Kabelkanal abgelegten Kabeln (3), der an Winkelstücken (1) anzuordnen ist, die in der Form eines konvexen Zweiflachs in dem zu öffnenden Kabelkanals vorgesehen sind,
wobei der zu öffnende Kabelkanal Sektionen (2A, 2B) aufweist, die durch geradlinige Abschnitte gebildet werden, die sich an einem Punkt treffen, an dem sie direkt oder indirekt eines der Winkelstücke (1) mit einer scharfen Kante (4) bilden, wobei das Winkelstück (1) einer Richtungsänderung des Kabelkanals entspricht,
welcher Adapter aus einem Kabelkanalförmigen Körper (5) geformt ist, der eine konkave Fläche zur Befestigung an der scharfen Kante (4) des Winkelstückes (1) und an den beiden Flächen des Winkelstückes (1) neben der scharfen Kante (4), sowie eine konvexe Fläche zum Stützen der Kabel (3) gegenüber der konkaven Fläche aufweist, wobei die konvexe Fläche von der konkaven Fläche einen Abstand aufweist, der sich graduell in Richtung der Längsenden des Kabelkanalförmigen Körpers (5) bis zu entsprechenden Randlappen (10) zur Befestigung an den Flächen des Winkelstückes (1) vermindert, wobei der Kabelkanalförmige Körper (5) durch ein tafelförmiges Teil (8) gebildet wird, das in Draufsicht etwa rechteckig und im Querschnitt Omega-förmig ausgebildet ist und in Richtung eines der Hauptmaße eine buckelförmige Form hat, die sich in Längsrichtung zu der Hauptrichtung in entsprechende Randlappen (10) erstreckt,
wobei die Randlappen (10) Mittel zur Befestigung an den Wänden der Sektionen (2A, 2B) aufweisen, die das Winkelstück (1) bilden,
**dadurch gekennzeichnet, dass** das tafelförmige Teil (8) in Querrichtung mit voneinander getrennten Schwächungslinien (17) versehen ist, die es zulassen, dass das tafelförmige Teil (8) in getrennte Teile entsprechend der Höhe des Kabelkanals aufgeteilt werden können.

2. Adapter nach Anspruch 1, **dadurch gekennzeichnet, dass** die Schwächungslinien (17) des tafelförmigen Teils (8) durch Perforationslinien gebildet sind.

3. Adapter nach Anspruch 1 oder 2, **dadurch gekennzeichnet, dass** die Schwächungslinien (17) in gestaffelter Form gebildet sind und in den getrennten Teilen Montagenuten (25) definieren.

4. Adapter nach einem oder mehreren der Ansprüche 1 bis 3, **dadurch gekennzeichnet, dass** an dem tafelförmigen Teil (8) an mindestens einem Ende der buckelförmigen Form (9) und den Randlappen (10) eine flache schirmartige tafelförmige Verlängerung (11) befestigt ist, die rechtwinklig zu dem tafelförmigen Teil (8) verläuft und einen konkaven inneren Rand (12) hat, der mit der Kante des tafelförmigen Teils (8) zusammenfällt, und einen konvexen äußeren Rand (13) hat, der durch zwei geradlinige Abschnitte gebildet sind, die durch einen gebogenen Abschnitt miteinander verbunden sind.

5. Adapter nach einem oder mehreren der Ansprüche 1 bis 4, **dadurch gekennzeichnet, dass** die Befestigungsmittel für die Randlappen (10) durch Klebemittel gebildet werden.

6. Adapter nach einem oder mehreren der Ansprüche 1 bis 4, **dadurch gekennzeichnet, dass** die Befestigungsmittel für die Randlappen (10) durch mechanische Mittel gebildet werden.

7. Adapter nach einem oder mehreren der Ansprüche 1 bis 6, **dadurch gekennzeichnet, dass** das tafelförmige Teil (8) durch ein winkelförmiges flaches Teil (19) ergänzt wird, das einen konkaven Rand hat, mit dem es an der buckelförmigen Form (9) des tafelförmigen Teils (8) angreift.

8. Adapter nach Anspruch 7, **dadurch gekennzeichnet, dass** das winkelförmige flache Teil (19) entlang seiner beiden Seiten mit Schwächungslinien (22) versehen ist, die sich überkreuzen und im Abstand voneinander angeordnet sind.

9. Adapter nach Anspruch 8, **dadurch gekennzeichnet, dass** die Schwächungslinien (22) des winkelförmigen flachen Teils (19) durch Perforationslinien gebildet werden.

10. Adapter nach einem oder mehreren der Ansprüche 1 bis 9, **dadurch gekennzeichnet, dass** das tafelförmige Teil (8) an seiner konkaven Fläche mit einer Trennwand (14) versehen ist, die sich rechtwinklig zu dem tafelförmigen Teil (8) von einem der Randlappen (10) zu dem anderen erstreckt, und dass die Trennwand (14) einen rechtwinkligen Ausschnitt (15) aufweist.

## Revendications

1. Adaptateur de courbure de câbles (3) installés dans un chemin de câbles ouvrant, adapté pour être appliqué aux coudes (1) qui sont formés, sous la forme de dièdres convexes, dans ledit chemin de câbles ouvrant, ledit chemin de câbles ouvrant étant du type comprenant des sections (2A, 2B) formées par des portions rectilignes se croisant en un point pour y former, de manière directe ou indirecte, l'un desdits coudes (1) ayant une arête vive (4), ledit coude (1) correspondant à un changement de direction dudit chemin de câbles, ledit adaptateur étant formé par un élément formant corps en forme de canal (5) ayant une surface concave d'application sur l'arête vive (4) dudit coude (1) et sur les deux surfaces dudit coude (1) adjacentes à ladite arête vive (4), et une surface convexe pour supporter lesdits câbles (3), à l'opposé de ladite surface concave, qui est espacée de ladite surface concave d'une distance diminuant progressivement en direction des extrémités longitudinales dudit élément formant corps en forme de canal (5) jusqu'à former des rabats respectifs de bordure (10) pour une fixation sur les surfaces dudit coude (1), ledit élément formant corps en forme de canal (5) étant formé par un élément en forme de feuille (8) généralement rectangulaire sur une vue en plan et en forme d'oméga en section transversale qui, dans le sens d'une de ses dimensions principales, a une configuration en forme de bosse s'étendant longitudinalement à ladite dimension principale dans les rabats respectifs de bordure (10), lesdits rabats de bordure (10) ayant un moyen pour une fixation sur les parois desdites sections (2A, 2B) formant le coude (1), **caractérisé en ce que** ledit élément en forme de feuille (8) est muni transversalement de lignes de fragilité (17) séparées les unes des autres et permettant de plier ledit élément en forme de feuille (8) en portions distinctes appropriées à la hauteur dudit chemin de câbles.

2. Adaptateur selon la revendication 1, **caractérisé en ce que** lesdites lignes de fragilité (17) de l'élément en forme de feuille (8) sont constituées de lignes de perforations.

3. Adaptateur selon la revendication 1 ou 2, **caractérisé en ce que** lesdites lignes de fragilité (17) sont formées en décalage, définissant dans lesdites portions distinctes des encoches encastrées (25).

4. Adaptateur selon l'une quelconque des revendications 1 à 3, **caractérisé en ce que** ledit élément en forme de feuille (8) est placé de manière fixe à au moins une extrémité de ladite configuration en forme de bosse (9) et desdits rabats de bordure (10) avec un prolongement en forme de feuille (11) du type visière plate qui est perpendiculaire audit élément en forme de feuille (8) et possède un bord intérieur concave (12), coïncidant avec le bord dudit élément en forme de feuille (8), et un bord extérieur convexe (13) formé par deux portions rectilignes reliées par une portion courbe.

5. Adaptateur selon l'une quelconque des revendications 1 à 4, **caractérisé en ce que** ledit moyen de fixation des rabats de bordure (10) se compose d'un moyen adhésif.

6. Adaptateur selon l'une quelconque des revendications 1 à 4, **caractérisé en ce que** ledit moyen de fixation des rabats de bordure (10) est constitué d'un moyen mécanique.

7. Adaptateur selon l'une quelconque des revendications 1 à 6, **caractérisé en ce que** ledit élément en forme de feuille (8) est complété par un élément plat angulaire (19) ayant un bord concave avec lequel il coopère dans ladite configuration en forme de bosse (9) de l'élément en forme de feuille (8).

8. Adaptateur selon la revendication 7, **caractérisé en ce que** ledit élément plat angulaire (19) est muni, le long de ses deux côtés, de lignes de fragilité (22) qui se croisent et sont espacées les unes des autres.

9. Adaptateur selon la revendication 8, **caractérisé en ce que** lesdites lignes de fragilité (22) de l'élément plat angulaire (19) sont constituées de lignes de perforations.

10. Adaptateur selon l'une quelconque des revendications 1 à 9, **caractérisé en ce que** ledit élément en forme de feuille (8) est muni, sur sa surface concave, d'une paroi de séparation (14) s'étendant perpendiculairement audit élément en forme de feuille (8) depuis l'un desdits rabats de bordure (10) jusqu'à l'autre rabat de bordure (10), ladite paroi de séparation (14) comportant une encoche à angle droit (15).
